# EUROPÄISCHE PATENTSCHRIFT

(11) **EP 1 190 815 B1**
(45) Veröffentlichungstag und Bekanntmachung des Hinweises auf die Patenterteilung: **03.12.2003**
(21) Anmeldenummer: 00120607.7
(22) Anmeldetag: 21.09.2000
(51) Int. Cl.: B23Q 11/12, B23Q 1/38, B23B 31/00

(54) **Verfahren und Vorrichtung zur dynamischen Schmierung eines Kraftspannfutters**
Method and device for dynamic lubrication of a power chuck
Procédé et dispositif de lubrification dynamique d'un mandrin de serrage

(43) Veröffentlichungstag der Anmeldung: 27.03.2002
(73) Patentinhaber: Forkardt Schweiz AG, 8307 Effretikon (CH)
(72) Erfinder: Bohler, Erwin, 9553 Bettwiesen (CH)
(74) Vertreter: Blum, Rudolf Emil Ernst

(56) Entgegenhaltungen:
- EP-A- 0 792 720
- DE-C- 3 822 506
- FR-A- 2 248 901
- PATENT ABSTRACTS OF JAPAN vol. 1999, no. 11, 30. September 1999 (1999-09-30) & JP 11 156670 A (MATSUMOTO KIKAI KOGYO KK), 15. Juni 1999 (1999-06-15)

## Beschreibung

Kraftspannfutter werden unter anderem auf vollautomatischen Werkzeugmaschinen für die Herstellung grosser Serien von sehr präzise verarbeiteten Werkstücken eingesetzt. Wegen der hohen Kosten von Wartungsarbeiten an den Futtern sollten diese eine möglichst lange Standzeit zwischen aufeinanderfolgenden Revisionen erreichen, auch wenn sie in sehr rascher Folge angezogen und wieder gelöst werden, und oft - etwa beim Schleifen harter Stähle - in einer mit hartem Schleifstaub durchsetzten Atmosphäre arbeiten, welche zur raschen Abnützung aller ihr ausgesetzten Mechanismen führt. Es ist bekannt, den Mechanismus zum Spannen und Lösen der Zange des Futters vor vorzeitiger Abnützung zu schützen, indem er in einem abgedichteten, ganz oder teilweise mit Öl gefüllten Hohlraum im Inneren des Kraftspannfutters eingeschlossen wird. Dadurch wird die Abnützung dieses - meist hydraulisch betätigten - Mechanismus stark reduziert, und die Standzeit zwischen aufeinanderfolgenden Revisionen des Futters wesentlich verlängert, was bei der Massenanfertigung von entscheidender Bedeutung sein kann. Die französische Patentschrift 2.248.901 schlägt eine solche Lösung vor, bei welcher der innere Hohlraum des Futters nach aussen abgedichtet ist, und mit Fett gefüllt werden kann, so dass die beweglichen Teile des Futters stets geschmiert bleiben. Die deutsche Patentschrift DE 38 22 506 C1 schlägt vor, einen radial möglichst weit aussen liegenden, ringförmigen Hohlraum innerhalb des Futters mit Öl zu füllen, welcher durch die Betätigung des Futtermechanismus radial einwärts, in Richtung der zu schmierenden Teile gepumpt wird, und bei schnellem Drehen des Futters wieder auswärts, in den Hohlraum zurückgefördert wird. Das im Futter eingeschlossene, nicht erneuerte Ölvolumen durchläuft so einen geschlossenen Kreislauf.

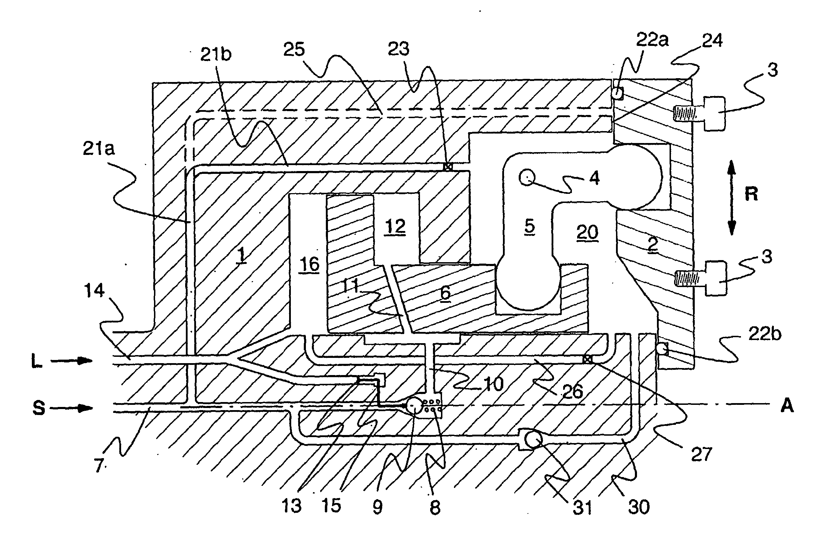

Solchen statischen Schmierungen durch ein eingeschlossenes Ölvolumen haften jedoch gewisse Nachteile an. Der Ölvorrat muss in regelmässigen Abständen ergänzt oder ersetzt werden, was eine wiederkehrende Wartung verlangt die bei grossen Automaten mit in der Regel schwer zugänglichem Futter kostspielig ist. Ausserdem ist es kaum möglich, ständig einen gewissen Überdruck gegenüber der Umgebung in dem notwendigerweise durch bewegliche Teile abgeschlossenen Hohlraum in welchem sich der zu schützende Mechanismus befindet, aufrechtzuerhalten, wie dies nötig wäre um das Eindringen fremder Partikel, insbesondere von Schleifstaub, gänzlich zu verhindern. Das US Patent 4'723'778 schlägt die Schmierung des Mechanismus eines pneumatisch gesteuerten Futters durch einen, aus einer stationären Quelle stammenden und in der Steuerluft suspendierten Ölnebel vor. Dieser kann über eine kalibrierte Düse und ein Rückschlagventil in kontrollierter Weise aus der pneumatischen Steuerleitung in die Antriebsmechanik des Futters eindringen, um sie zu schmieren. Wegen des Rückschlagventiles kann das überschüssige Öl jedoch nicht in eine stationäre Senke zurückgeführt werden, sondern muss über nicht-abgedichtete Leckstellen des Futters aus diesem entweichen, was nachteilig ist und einen geschlossenen Schmier-Kreislauf verunmöglicht. Auch eignet sich diese Lösung schlecht für nicht pneumatisch, sondern hydraulisch gesteuerte Futter. Hier soll die Erfindung Abhilfe schaffen; sie soll nunmehr anhand der Beschreibung eines bevorzugten Ausführungsbeispieles und mit Hilfe der Zeichnung näher erläutert werden.

Es zeigt die einzige Figur einen stark schematisierten Längsschnitt durch ein erfindungsgemässes Kraftspannfutter, dessen Zange hydraulisch angetrieben ist. Darin bezeichnet A die Rotationsachse und 1 den Grundkörper des Futters. Bei einem Dreibackenfutter kommt die gezeigte Anordnung drei Mal, in 120°-Teilung um die Rotationsachse A verteilt, vor. Der besseren Übersicht halber zeigt die Zeichnung in ein und demselben Schnitt Leitungen, die an sich in verschiedenen, um einen bestimmten Winkel um die Rotationsachse A gedrehten Ebenen liegen müssen, damit sie aneinander vorbeikommen können, ohne einander zu durchdringen. Obwohl die Erfindung ohne weiteres auf Futter mit mehr oder weniger als drei Backen anwendbar ist, wird der Klarheit halber im folgenden nur auf die Ausführungsform mit drei Backen Bezug genommen, da diese am verbreitetsten ist.

Eine Grundbacke 2 ist in üblicher Weise mittels einer (nicht gezeigten) Backenführung so am Grundkörper 1 angebracht, dass sie sich - wie durch den Doppelpfeil R gezeigt - radial (bezüglich der Achse A) gegenüber dem Grundkörper bewegen kann. Sie trägt zwei Schrauben 3 zur Befestigung einer (nicht gezeigten) Bakke, welche zusammen mit zwei weiteren (ebenfalls nicht gezeigten) um 120° versetzten Backen die Zange des Futters bildet. Die radiale, in der Zeichnung vertikale, Bewegung der Grundbacke 2 wird durch einen um eine Achse 4 schwenkbaren Winkelhebel 5 bewirkt, der die achsiale Verschiebung eines hydraulisch angetriebenen Kolbens 6 in die radiale Richtung umlenkt. Zum Schliessen der Zange, d.h. um die Grundbacke 2 in Richtung der Rotationsachse A zu bewegen, wird der Kolben 6 in der Zeichenebene nach links gedrückt. Hierfür wird, wie durch den Pfeil S angedeutet, durch eine (nicht gezeigte) in der Regel stationäre Druckquelle eine - im Folgenden kurz als Öl bezeichnete - hydraulische Flüssigkeit in eine Spannleitung 7 gepresst.

In anderen Ausführungsformen kann das Umlenken der Antriebskraft für die Zange von der achsialen in die radiale Richtung auf andere, bekannte Weise geschehen, etwa indem anstatt des Winkelhebels 5 ein sogenannter Keilhaken oder eine andere Vorrichtung verwendet wird.

Die dichte Verbindung zwischen der stationären Druckquelle und der mit dem Grundkörper 1 des Futters rotierenden Spannleitung 7 geschieht in bekannter Weise über einen rotierenden Anschluss mit abgedichteten Ringnuten und ist daher hier weder gezeigt noch weiter beschrieben. Es sei jedoch bemerkt, dass solche rotierenden Anschlüsse relativ aufwendig sind und einen nicht vernachlässigbaren Platz beanspruchen, so dass es von Interesse ist, ihre Anzahl zu beschränken. Das in der Spannleitung 7 unter Druck stehende Öl gelangt über das durch eine Schraubenfeder 8 vorbelastete Kugel-Rückschlagventil 9, eine Zuleitung 10 im Grundkörper, und einen im Kolben 6 ausgesparten Kanal 11 in eine erste Kammer 12. Der Druck in dieser durch eine Arbeitsfläche des Kolbens 6 abgeschlossene Kammer treibt diesen in der Zeichnung nach links, was eine Rotation des Winkelhebels im Uhrzeigersinn und eine Verschiebung der Grundbacke 2 samt der darauf befestigten (nicht gezeigten) Zangenbacke in Richtung der Rotationsachse A erzeugt. Zusammen mit einer entsprechenden Bewegung der beiden weiteren (nicht gezeigten), um 120° versetzten Zangenbacken bewirkt dies ein Schliessen der Zange des Futters. Danach hält das Rückschlagventil 9 die Zange auch dann geschlossen, wenn der durch den Pfeil S angedeutete Druck in der Spannleitung 7 absichtlich oder unabsichtlich nachlässt. Um die Zange zu lösen wird der Druck in der Spannleitung abgebaut und eine Löseleitung 14 unter Druck gesetzt, wie durch den Pfeil L angedeutet. Dieser Druck öffnet über einen dem Fachmann bekannten (und nur schematisch angedeuteten) Übertragungsmechanismus 15 mit einer durch den Druck in der Löseleitung 14 beaufschlagten Kolben 13, das Rückschlagventil 9 gegen die Kraft der Feder 8. Ausserdem gelangt der in der Löseleitung 14 herrschende Druck in eine zweite Kammer 16. Da das Öl über den Kanal 11, die Zuleitung 10 und das nunmehr geöffnete Rückschlagventil 9 aus der ersten Kammer 12 entweichen kann, bewegt der Druck in der zweiten Kammer 16 den Kolben 16 in der Zeichnung nach rechts, der Winkelhebel 5 schwenkt im Gegenuhrzeigersinn, und die Grundbacke 2 entfernt sich von der Rotationsachse A. Infolge der synchronen Bewegung der beiden weiteren (nicht gezeigten) in 120°-Teilung um die Achse A angeordneten Grundbacken wird die Zange des Futters geöffnet. Das Prinzip der soeben beschriebenen Anordnung für eine hydraulische Betätigung der Zange eines Kraftspannfutters ist dem Fachmann bekannt. Es sollen nun die für ein solchermassen hydraulisch betätigtes Kraftspannfutter typischen Bestandteile einer Ausführungsform der Erfindung näher erläutert werden.

Der Winkelhebel 5 oder etwa ein äquivalenter Keilhaken, sowie fallweise andere, nicht gezeigte, aber für die Zangenbetätigung notwendige, bewegliche Teile, sind in einem nach aussen abgedichteten Hohlraum 20 eingeschlossen. Von den dafür nötigen Dichtungsstellen sind nur zwei als Beispiele gezeigt, nämlich die Dichtungen 22a, 22b, welche den Grundkörper 1 so gegen die Grundbakke 2 abdichten, dass sich diese zum Spannen und Lösen der Zange hin und her bewegen kann, ohne die Abdichtung des Hohlraumes zu gefährden. Der Klarheit halber wurden alle weiteren zur Abdichtung dieses Hohlraumes 20 notwendigen Dichtungen, wie auch diejenigen die für ein ordnungsgemässes Arbeiten des Kolbens 6 nötig sind, ausgelassen. Der Hohlraum 20 enthält dasselbe Öl wie das für die hydraulische Zangenbetätigung verwendete, und es sind die im Folgenden beschriebenen Mittel vorgesehen, um diese Ölfüllung beim Betrieb des Kraftspannfutters, insbesondere bei wiederholtem Öffnen und Schliessen der Zange, progressiv zu erneuern.

Eine Zuführleitung 21a, 21b verbindet die Spannleitung 7 mit dem Hohlraum 20 und versorgt diesen mit Öl, wenn die Spannleitung 7 unter Druck steht, d.h. bei sich schliessender oder geschlossener Zange. Im Zuführleitungsteil 21b ist eine Düse 23 eingesetzt, welche den Zufluss von Öl in den Hohlraum 20 drosselt. Des weiteren verbindet eine Abführleitung 26 den Hohlraum 20 mit der zweiten Kammer 16, die bei sich schliessender oder geschlossener Zange unter einem geringeren Druck als die Spannleitung 7 steht, so dass dann Öl aus dem Hohlraum 20 über die zweite Kammer in die Löseleitung 14 abfliessen kann. Solange die Zange durch einen Überdruck in der Spannleitung 7 gespannt wird entsteht daher ein gewisser Durchfluss von Öl durch den Hohlraum 20, wobei eine in der Abführleitung 26 eingesetzte Düse 27 im Zusammenspiel mit der Düse 23 diesen von der Spannleitung 7 über den Hohlraum 20 zur Löseleitung 14 stattfindenden Durchfluss regelt. Ausserdem sorgen die Düsen 23, 27 dafür, dass das so entstehende Überströmen von Öl aus der Spannleitung 7 in die Löseleitung 14 den für das Schliessen der Zange benötigten Druck in der ersten Kammer nur unwesentlich vermindert.

In einer weiteren, vorteilhaften Ausführungsweise kann der in der Zeichnung horizontale Teil 21b der Zuführleitung durch den gestrichelt gezeichneten Teil 25 ersetzt werden, der nicht direkt in den Hohlraum führt, sondern in einen Spalt 24 zwischen dem Grundkörper 1 und der Grundbacke 2. Dieser, in der Figur stark schematisiert dargestellte Führungsspalt 24 bildet dann ein Schmierintervall. Es entsteht etwa (in nicht gezeigter Weise) dadurch, dass die als Schwalbenschwanz oder auf andere Weise gebildeten Führung, welche eine radiale Bewegung der Grundbacke 2 bezüglich des Grundkörpers 1 ermöglicht, ein Spiel von einigen µ aufweist. Wenn der Führungsspalt durch eine Dichtung 22a sowie weitere (nicht gezeigte) Dichtungen nach aussen abgeschlossen ist, kann er ausserdem die Rolle der Düse 23 übernehmen, d.h. den Ölfluss aus der Zuführleitung 21a in den Hohlraum drosseln. Diese Variante macht die Düse 23 überflüssig, und sorgt gleichzeitig für einen Fluss von Frischöl durch den Führungsspalt, was dessen Abnützung bei ständigem Öffnen und Schliessen der Zange auf ein absolutes Mindestmass herabsetzt.

Es sei jetzt der Zustand betrachtet, wenn zum Öffnen der Zange der Druck in der Löseleitung 14 denjenigen in der Spannleitung 7 übersteigt. Dann strömt Öl in entgegengesetzter Richtung, von der Löseleitung 14 über die Abführleitung 26, den Hohlraum 20 und die Zuführleitung 21a, 21b oder 25 zur Spannleitung 7. Falls eine exakte Symmetrie aller Strömungen bestünde und bei aufeinanderfolgenden Arbeitszyklen des Spannfutters die Öffnungsdauer der Zange genau gleich lang wie ihre Schliessdauer wäre, stünde das Öl im Hohlraum 20 zwar in erwünschter Weise unter Druck, es würde aber nur durch den Hohlraum hin und her gespült, ohne progressiv erneuert zu werden. Solche eine perfekte Symmetrie kommt jedoch in der Praxis sozusagen niemals vor, so dass praktisch immer mit einer allmählichen Erneuerung des Öles im Hohlraum, d.h. mit einer dynamischen Frischöl-Schmierung des Winkelhebels S und seiner Zubehöre gerechnet werden kann. Insbesondere ändert sich aus konstruktiven Gründen bei der Bewegung des Kolbens 6 das Volumen des Hohlraumes 20 fast zwangsläufig, wodurch die Symmetrie zwischen dem Öffnungs- und dem Schliessvorgang der Zange zerstört wird, weil bei einer Verkleinerung des Volumens mehr Öl aus dem Hohlraum heraus als in diesen hineinfliesst. Dadurch könnte im Hohlraum ein unerwünscht hoher Druck auftreten, und es zeigt die Figur wie dies vermieden werden kann.

Wie weiter oben beschrieben, bewegt sich beim Öffnen der Zange der Kolben 6 nach rechts, wodurch in der hier gezeigten Ausführungsform das Volumen des Hohlraumes 20 verkleinert wird. Um einen übermässigen Druck im Hohlraum zu vermeiden ist eine mit einem zweiten Rückschlagventil 31 versehene Entlastungsleitung 30 vorgesehen, die den Hohlraum mit einem oberhalb des ersten Rückschlagventiles 9 liegenden Teil der Spannleitung 7 verbindet. Über die Entlastungsleitung 30 kann das überschüssige Öl in die bei sich öffnenden Zange drucklose Spannleitung 7 befördert werden. Beim Schliessen der Zange verhindert das in der Entlastungsleitung 30 vorgesehene zweite Rückschlagventil 31 eine direkt Übertragung des in der Spannleitung 7 aufgebauten Druckes in den Hohlraum.

Es ermöglicht also die Erfindung eine dynamische Frischöl-Schmierung des Winkelhebels 5 und anderer (nicht gezeigter) Bestandteile des Antriebsmechanismus der Zange, inklusive von Bestandteilen welche strenggenommen nicht innerhalb des Hohlraumes 20 liegen, wie etwa Führungsschienen der Grundbacke 2. Es können die Düsen 23 und 27 in Funktion der Länge der Arbeitszyklen der Zange, des Druckes in den Zu- und Ableitungen etc., so kalibriert werden, dass pro Zeiteinheit die gewünschte Ölmenge durch den Hohlraum 20 fliesst, und zwar von der Spannleitung 7 kommend und in die Löseleitung 14 abfliessend. Es sei jedoch bemerkt, dass durch eine entsprechende Anordnung der Leitungen und Ventile ein Fluss in umgekehrter Richtung erzeugt werden kann sofern dies vorteilhaft erscheint, insbesondere für Futter bei denen das Volumen des den Antriebsmechanismus der Zange enthaltenden Hohlraumes beim Schliessen der Zange abnimmt, anstatt wie im hier beschriebenen Beispiel beim Öffnen derselben.

Es hat sich gezeigt, dass die Verwendung desselben Öles sowohl für die hydraulische Betätigung der Zange des Kraftspannfutters wie für die dynamische Schmierung des Antriebsmechanismus der Zange keine Probleme aufwirft, und dass handelsübliche hydraulische Flüssigkeiten dafür geeignet sind. Obwohl ein kombiniertes Leitungssystem für die Zangenbetätigung und für eine dynamische Schmierung besonders vorteilhaft ist, sei abschliessend noch erwähnt, dass die erfindungsgemässe Schmierung auch für Futter angewendet werden kann, deren Spannbacken nicht hydraulisch sondern auf andere Weise - beispielsweise magnetisch oder rein mechanisch - angetrieben sind. Dies gilt insbesonders für Futter mit einer sogenannten "Hinterend-Betätigung", bei welcher die in der Regel pneumatisch, hydraulisch oder elektrisch erzeugte Kraft für die Betätigung der Zange nicht wie im hier gezeigten Beispiel innerhalb des Futters, d.h. nahe bei der Spindelnase in eine mechanische Kraft umgesetzt wird, sondern am hinteren Spindelende. Dort wird dann mittels Kolben, Elektromotore oder anderen Mitteln eine mechanische Kraft erzeugt, die durch Kabel, Gestänge oder dergleichen innerhalb der Spindel bis zur Spindelnase, und dort bis zu den Backen des Futters geführt wird. Es fallen dann im Futter alle hier gezeigten Mittel für die Übertragung einer hydraulischen Kraft sowie für deren Umsetzung in eine mechanische Kraft weg, und es bleiben in der Regel nur Mittel zur mechanischen Umlenkung von achsialen Antriebskräften in die radiale Bewegungsrichtungen der Backen. Dann weist das erfindungsgemässe Futter nur noch die Zu- und Abführleitungen, sowie fallweise die nötigen Ventile und Dichtungen auf, welche für den Umlauf der Schmierflüssigkeit nötig sind. Diese Leitungen können an eigene, nur der Schmierung dienende Druck-Quellen und - Senken angeschlossen sein, sie können aber auch in ähnlicher Weise wie hier beschrieben, jedoch am hinteren Spindelende, an einem hydraulischen Kreislauf für die Betätigung der Zange angeschlossen werden, falls ein solcher existiert und seine Kraft mechanisch vom Spindelende zur Spindelnase übertragen wird. Falls jedoch die Backen ohne Hydraulik, beispielsweise pneumatisch oder elektrisch, betätigt werden, benötigt der Schmierkreis eine eigene Versorgung, die nötigenfalls über eigene rotierende Anschlüsse mit abgedichteten Ringnuten am Spindelende realisiert werden kann.

Es hat sich erwiesen, dass mit der erfindungsgemässen dynamischen Schmierung extrem hohe Standzeiten des Kraftspannfutters ohne messbare Abnützung des Zangenmechanismus erreicht werden können. Dadurch wird nicht nur eine Wartung des Futters praktisch hinfällig, was für Gross-Serien wesentlich ist, sondern es wird indirekt die Präzision der Verarbeitung erhöht indem durch Wegfall von Abnützung der Schliessdruck der Zange ohne Nacheinstellung konstant bleibt, was über extrem viele Zyklen exakt reproduzierbare Arbeitsgänge der mit einem erfindungsgemässen Futter bestückten Werkzeugmaschine ermöglicht. Zudem verlangt die erfindungsgemässe Schmierung bei Futtern mit hydraulisch angetriebener Zange keinen zusätzlichen rotierenden Anschluss zwischen mit dem Futter rotierenden Leitungen und stationären Druckquellen oder -Senken.

## Patentansprüche

1. Verfahren zum Schmieren von gegenseitig beweglichen Organe eines (auf dem Spindelstock einer Werkzeugmaschine angebrachten) Kraftspannfutters, **dadurch gekennzeichnet, dass** diese Organe in einem nach aussen im wesentlichen abgedichteten Hohlraum untergebracht sind oder an diesen angrenzen, und dass während des Betriebes des Futters ein schmierendes Fluid dem Hohlraum aus einem stationären Reservoir zugeführt und in ein stationäres Reservoir abgeführt wird.

2. Verfahren nach Anspruch 1, **dadurch gekennzeichnet, dass** der Druck des schmierenden Fluids im Hohlraum mindestens zeitweise den atmosphärischen Druck übersteigt.

3. Verfahren nach Anspruch 2, **dadurch gekennzeichnet, dass** das Schmierintervall der Führung mindestens einer Zangenbacke des Futters vom Hohlraum her mit schmierendem Fluid versorgt wird.

4. Verfahren nach einem der vorangehenden Ansprüche für ein Futter mit hydraulisch betätigter Zange, **dadurch gekennzeichnet, dass** die Zu- und Abfuhr von Fluid durch die beim Öffnen und Schliessen der Zange im hydraulischen Betätigungskreis derselben auftretenden Druckunterschiede bewirkt wird.

5. Verfahren nach Anspruch 4, **dadurch gekennzeichnet, dass** das im hydraulischen Kreis wirkende Fluid als schmierendes Fluid verwendet wird.

6. Kraftspannfutter zur Durchführung des Verfahrens nach einem der Ansprüche 1 bis 5 mit beweglichen Organen zum Öffnen und Schliessen seiner Zange, **dadurch gekennzeichnet, dass** mindestens ein Organ in einem nach aussen im wesentlichen abgedichteten Hohlraum untergebracht ist, der mindestens zeitweise durch mindestens eine Zuführleitung mit einer stationären Quelle für ein schmierendes Fluid verbunden ist.

7. Kraftspannfutter nach Anspruch 6, **dadurch gekennzeichnet, dass** das Schmierintervall der Führung mindestens einer Zangenbacke des Futters an den Hohlraum angrenzt.

8. Kraftspannfutter nach Anspruch 6 oder 7, **dadurch gekennzeichnet, dass** der Hohlraum mindestens zeitweise durch mindestens eine Abführleitung mit einer stationären Senke für das schmierende Fluid verbunden ist.

9. Kraftspannfutter nach Anspruch 8, **dadurch gekennzeichnet, dass** seine Zange hydraulisch betätigbar ist und dass die Zuführ- und die Abführleitung am hydraulischen Betätigungskreis der Zange angeschlossen sind.

10. Kraftspannfutter nach Anspruch 9, **dadurch gekennzeichnet, dass** mindestens ein Teil der Organe Mechanismen zur Übertragung hydraulischer Betätigungskräfte auf die Zange sind.

11. Kraftspannfutter nach Anspruch 9 oder 10, **dadurch gekennzeichnet, dass** der hydraulische Betätigungskreis mindestens eine mit einem ersten Rückschlagventil versehene Spannleitung zur Übertragung des für das Schliessen der Zange notwendigen Druckes sowie eine den Hohlraum mit der Spannleitung verbindende Entlastungsleitung aufweist, die ein zweites Rückschlagventil enthält und stromaufwärts des ersten Rückschlagventiles in die Spannleitung mündet.

12. Kraftspannfutter nach Ansprch 9 oder 10, **dadurch gekennzeichnet, dass** der hydraulische Betätigungskreis mindestens eine Löseleitung zur Übertragung des für das Öffnen der Zange notwendigen Druckes sowie eine den Hohlraum mit der Löseleitung verbindende Entlastungsleitung aufweist.

13. Kraftspannfutter nach einem der Ansprüche 8 bis 12, **dadurch gekennzeichnet, dass** in der Zuführund/oder in der Abführleitung eine drosselnde Düse angebracht ist.

## Claims

1. Method for lubricating mutually moving parts of a power chuck (mounted on the stock of a machine-tool), **characterised in that** these parts are enclosed in, or adjacent to, an essentially hermetic enclosure, and that lubricating fluid is fed from a stationary source to the enclosure, and discharged from the enclosure into a stationary sink during the operation of the chuck.

2. Method according to claim 1, **characterised in that** the pressure of the lubricating fluid in the enclosure at least sometimes exceeds the atmospheric pressure.

3. Method according to claim 2, **characterised in that** the lubricating clearance of the guide of at least one jaw of the chuck is fed with lubricating fluid originating from the enclosure.

4. Method according to any preceding claim for a chuck with hydraulically actuated jaws, **characterised in that** the transfer of fluid to and from the enclosure is driven by the pressure differences which occur in the hydraulic command circuit of the chuck when opening and closing the jaws.

5. Method according to claim 4, **characterised in that** the actuating fluid of the hydraulic command circuit is used as lubricating fluid.

6. Power chuck for performing the method according to one of claims 1 to 5, **characterised in that** at least one part is enclosed in an essentially hermetic enclosure which is connected at least intermittently through a feeding conduit to a stationary source for a lubricating fluid.

7. Power chuck according to claim 6, **characterised in that** the lubricating clearance of the guide rail of at least one jaw of the chuck is adjacent to the enclosure.

8. Power chuck according to claim 6 or 7, **characterised in that** the enclosure is connected at least intermittently through at least one discharge conduit with a stationary sink for the lubricating fluid.

9. Power chuck according to claim 8, **characterised in that** its jaws are actuated hydraulically and that the feeding and the discharge conduit are connected with the hydraulic power circuit of the jaws.

10. Power chuck according to claim 9, **characterised in that** at least some parts are mechanical devices for transmitting hydraulic actuating forces to the jaws.

11. Power chuck according to claim 9 or 10, **characterised in that** the hydraulic actuating circuit comprises at least one activating conduit containing a return valve for transmitting the pressure needed for closing the jaws, and a relief conduit connecting the enclosure with the activating conduit, which relief conduit contains a second return valve and opens into the activating conduit upstream of the first return valve.

12. Power chuck according to claim 9 or 10, **characterised in that** the hydraulic power circuit comprises at least a releasing conduit for transmitting the pressure needed for opening the jaws, and a derivation conduit which connects the enclosure with the releasing conduit.

13. Power chuck according to one of the claims 8 - 12, **characterised in that** a choking nozzle is placed in the feeding and/or in the discharge conduit.

## Revendications

1. Procédé pour le graissage d'organes se mouvant les uns par rapport aux autres dans un mandrin à servo-commande (placé sur la poupée d'une machine-outil), **caractérisé en ce que** ces organes sont logés dans une enceinte essentiellement étanche ou jouxtent une telle enceinte, et **en ce que** pendant le fonctionnement du mandrin un fluide lubrifiant est introduit dans l'enceinte à partir d'un réservoir stationnaire et évacué vers un réservoir stationnaire.

2. Procédé selon la revendication 1, **caractérisé en ce que** la pression du fluide dans l'enceinte excède au moins momentanément la pression atmosphérique.

3. Procédé selon la revendication 2, **caractérisé en ce que** l'interstice de lubrification du guide d'au moins une mâchoire du mandrin est alimenté en fluide lubrifiant à partir de l'enceinte.

4. Procédé selon une des revendications précédentes pour un mandrin à mâchoire actionnée hydrauliquement, **caractérisé en ce que** l'amenée et l'évacuation de fluide sont provoquées par les différences de pression ayant lieu dans le circuit hydraulique de servo-commande du mandrin lors de son ouverture et de sa fermeture.

5. Procédé selon la revendication 4, **caractérisé en ce que** le fluide agissant dans le circuit hydraulique sert de lubrifiant.

6. Mandrin pour la réalisation du procédé selon une des revendications 1 à 5, avec des organes mobiles pour ouvrir et fermer ses mâchoires, **caractérisé en ce qu'**au moins un des organes est logé dans une enceinte essentiellement étanche reliée au moins momentanément par au moins une conduite d'alimentation avec une source stationnaire de lubrifiant fluide.

7. Mandrin selon la revendication 6, **caractérisé en ce que** l'interstice de lubrification d'au moins une mâchoire du mandrin jouxte l'enceinte.

8. Mandrin selon une des revendications 6 ou 7, **caractérisé en ce que** l'enceinte est reliée au moins momentanément par au moins une conduite d'évacuation avec un collecteur stationnaire pour le fluide lubrifiant.

9. Mandrin selon la revendication 8, **caractérisé en ce que** ses mâchoires sont actionnées hydrauliquement et que les conduites d'alimentation et d'évacuation sont connectées au circuit hydraulique de commande des mâchoires.

10. Mandrin selon la revendication 9, **caractérisé en ce qu'**au moins certains organes font partie de mécanismes pour transmettre aux mâchoires des forces hydrauliques.

11. Mandrin selon une des revendications 9 ou 10, **caractérisé en ce que** le circuit hydraulique de commande comprend au moins une conduite de serrage comportant une première soupape de non-retour, pour la transmission de la pression nécessaire au serrage des mâchoires, ainsi qu'une conduite de délestage reliant l'enceinte à la conduite de serrage, cette conduite de délestage comportant une seconde soupape de non-retour et débouchant dans la conduite de serrage en amont de la première soupape de non-retour.

12. Mandrin selon une des revendications 9 ou 10, **caractérisé en ce que** le circuit hydraulique de commande comporte au moins une conduite de déserrage pour la transmission de la pression nécessaire à l'ouverture des mâchoires, ainsi qu'une conduite de dérivation reliant l'enceinte à cette conduite de déserrage.

13. Mandrin selon une des revendications 8 à 12, **caractérisé en ce qu'**une buse d'étranglement est disposée dans la conduite de serrage et/ou la conduite de déserrage.
